# EUROPEAN PATENT SPECIFICATION

(11) **EP 4 353 541 B1**
(45) Date of publication and mention of the grant of the patent: **17.12.2025**
(21) Application number: 22852615.8
(22) Date of filing: 18.04.2022
(51) Int. Cl.: B60R 16/02, H01R 13/52, H01R 13/66

(54) **ON-VEHICLE CONNECTOR UNIT**
VERBINDEREINHEIT AM FAHRZEUG
UNITÉ DE CONNECTEUR EMBARQUÉE

(30) Priority: 03.08.2021 JP 2021127041; 03.08.2021 JP 2021127329; 07.09.2021 JP 2021145609
(43) Date of publication of application: 17.04.2024
(73) Proprietor: Japan Aviation Electronics Industry, Limited, Tokyo 150-0043 (JP)
(72) Inventor: LI, Teng, Tokyo 150-0043 (JP); NAKAMURA, Kazunobu, Tokyo 150-0043 (JP); IWAO, Naoki, Tokyo 150-0043 (JP)
(74) Representative: MERH-IP Matias Erny Reichl Hoffmann Patentanwälte PartG mbB
(86) International application number: PCT/JP2022/018021
(87) International publication number: WO 2023/013186

(56) References cited:
- WO-A1-2019/187791
- WO-A1-2019/188784
- CN-U- 205 389 046
- CN-U- 208 797 255
- CN-U- 208 986 250
- CN-U- 209 200 700
- JP-A- 2009 290 941
- JP-A- 2015 115 511
- JP-A- 2020 077 557
- KR-A- 20210 012 404
- US-A1- 2014 328 076

## Description

### [TECHNICAL FIELD]

The present invention relates to an on-vehicle connector unit to be used while attached to a vehicle.

### [BACKGROUND ART]

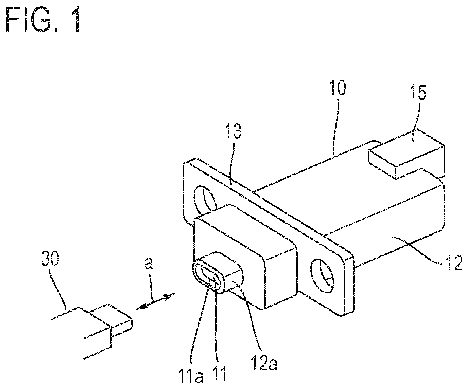

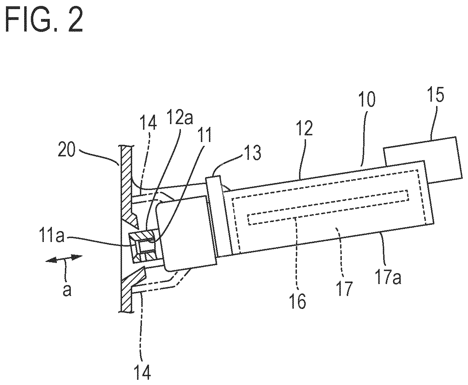

FIG. 1 shows a USB port described in Patent Literature 1 as a conventional example of this type of on-vehicle connector unit. This USB port 10 is attached to an inner box of a motorcycle, and FIG. 2 shows a state where the USB port 10 is attached to a back wall 20 of the inner box. In FIG. 1, reference numeral 30 denotes a USB plug of an external device such as a smart phone to be connected to the USB port 10.

The USB port 10 comprises a mouthpiece part 11 as a mechanical joint for inserting and removing a USB plug 30 in an insertion/removal direction indicated by an arrow a, and a casing 12 that supports the mouthpiece part 11 and is fixed to the vehicle body side. A mouthpiece holding part 12a covering the outer periphery of the mouthpiece part 11 is formed in the casing 12. The USB port 10 is arranged such that a port opening 11a at the tip of the mouthpiece part 11 faces downward when the USB port 10 is mounted in the vehicle, in other words, the entire body of the USB port 10 including the casing 12 is arranged at an angle when the USB port 10 is mounted in the vehicle.

A flange 13 is provided on the casing 12, and a hood 14 is further provided so as to be in close proximity to or in contact with the back surface of the back wall 20. The flange 13 serves as a water cut-off part that guides water flowing along the casing 12 to the outside of the port opening 11a. A coupler 15 is provided on the rear end side of the casing 12 such that a vehicle-body-side harness routed on the vehicle body side is connectable to the coupler 15.

A circuit board 16 is accommodated in the casing 12. The casing 12 is shaped such that a part serving as a lower surface side when the casing 12 is mounted in the vehicle is open. By injecting and filling potting resin 17 into the casing 12 from the open part of the lower surface side, the circuit board 16 is sealed in a watertight state. The lower surface of the casing 12 when the casing 12 is mounted in the vehicle serves as a potting surface 17a where the potting resin 17 is exposed.

Prior art relating to or similar to those described as background art is known from, for example, Patent Literature 2, and Patent Literature 3.

Patent Literature 2 discloses an automotive USB media connector including: a socket having therein a connecting terminal electrically connected to a terminal of a USB; a printed circuit board on which the socket is mounted; a communication cable located at a rear end of the printed circuit board to be electrically connected to the printed circuit board; a rear fixing body injection-molded to cover, seal, and further fix a connection between the printed circuit board and the communication cable; an LED installed at the printed circuit board to be electrically connected thereto; a lens for diffusing light from the LED; and a housing formed to cover the socket and the printed circuit board and detachably coupled with the rear fixing body.

Patent Literature 3 discloses a dustproof and waterproof USB slot for a computer hardware, the dustproof and waterproof USB slot having a first connecting port, a second connecting port, and a water storage cavity located between the first and second ports and communicated with outside through a drain hole for draining water in the water storage cavity.

### [PRIOR ART LITERATURE]

### [PATENT LITERATURE]

Patent Literature 1: International Publication No. WO2019/187791
Patent Literature 2: KR20210012404
Patent Literature 3: CN205380946U

### [SUMMARY OF THE INVENTION]

### [PROBLEMS TO BE SOLVED BY THE INVENTION]

As described above, in the USB port 10 shown in FIGS. 1 and 2, the potting resin 17 is filled in the casing 12 in which the circuit board 16 is accommodated, thereby sealing the circuit board 16 in a watertight state.

However, a work of filling the potting resin 17 in the casing 12 in this way is troublesome and requires a lot of man-hours, resulting in an increase in cost.

In view of this problem, an object of the present invention is to provide an on-vehicle connector unit which has a structure capable of withstanding water exposure (covering with water, getting wet due to being bathed in water) for on-vehicle use, and can reduce the cost as compared with prior arts.

### [MEANS TO SOLVE THE PROBLEMS]

A technical matter set forth herein is not intended to limit, either expressly or implicitly, the claimed invention and express tolerance of such limitation by anyone other than those who would benefit from the invention (e.g., the applicant and the rights holders), but is described merely to facilitate an understanding of the gist of the invention. An outline of the invention from other aspects can be understood, for example, from the claims at the time of filing this patent application.

A case houses, in its internal space, a circuit board. The case has a plate part having a drain hole at one end thereof. The drain hole communicates with the internal space of the case. The other end of the case is sealed to be watertight. However, the probability that water infiltrates into the internal space of the case from one end of the case is less than the probability that water infiltrates into the internal space of the case from the other end of the case. In other words, the case is a case to be used in an environment where the probability that water infiltrates into the internal space of the case from one end of the case is less than the probability that water infiltrates into the internal space of the case from the other end of the case. Further, in other words, the waterproof performance of one end of the case is lower than the waterproof performance of the other end of the case.

In particular, the present invention is defined by the independent claims. The dependent claims relate to embodiments thereof.

### [EFFECTS OF THE INVENTION]

According to the present invention, it is possible to obtain an on-vehicle connector unit that has a structure capable of withstanding water exposure for on-vehicle use, and can be configured at a lower cost than prior arts.

### [BRIEF DESCRIPTION OF THE DRAWINGS]

FIG. 1 is a perspective view showing a conventional example of an on-vehicle connector unit;
FIG. 2 is a partial cross-sectional view showing an attached state of the on-vehicle connector unit shown in FIG. 1;
FIG. 3A is a side view showing an embodiment of the on-vehicle connector unit according to the present invention;
FIG. 3B is a rear view of the on-vehicle connector unit shown in FIG. 3A;
FIG. 3C is a perspective view of the on-vehicle connector unit shown in FIG. 3A;
FIG. 4 is an exploded perspective view of the on-vehicle connector unit shown in FIG. 3C;
FIG. 5A is a plan view of the on-vehicle connector unit shown in FIG. 3C in a state where a rubber cap is removed;
FIG. 5B is a cross-sectional view taken along a line C-C in FIG. 5A;

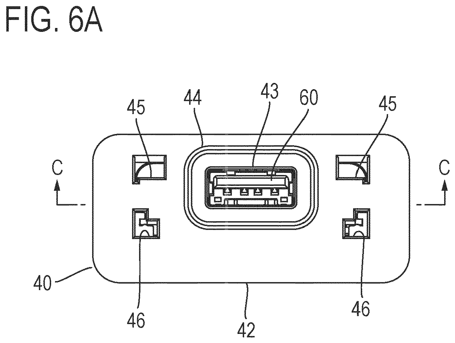

FIG. 6A is a front view of the on-vehicle connector unit shown in FIG. 3C in a state where the rubber cap is removed;

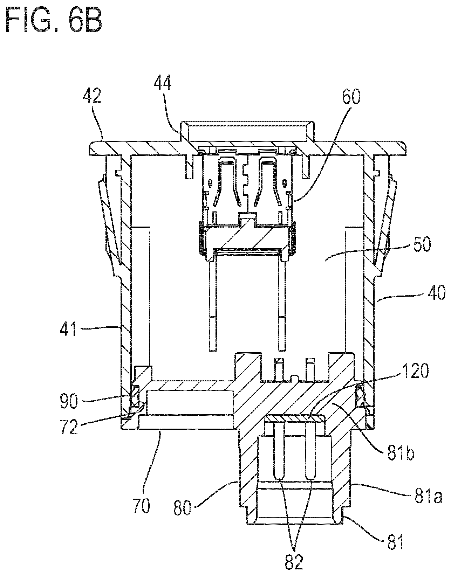

FIG. 6B is a cross-sectional view taken along a line C-C of FIG. 6A; and
FIG. 7 is a cross-sectional view showing a state in which the on-vehicle connector unit shown in FIG. 3C is attached to a partition wall when illustration of the rubber cap is omitted.

### [DETAILED DESCRIPTION OF THE EMBODIMENTS]

First, water exposure of an on-vehicle connector unit to be used while attached to a partition wall through which a cabin side and a vehicle body side of a vehicle are partitioned will be described.

The water exposure from the vehicle body side is assumed to be caused by a large amount of water such as water splashed by tires during traveling of a vehicle or high-pressure washing water when a vehicle is washed. However, with respect to water causing water exposure from the vehicle body side as described above, since intrusion of the water into the cabin side is prevented by existence of the partition wall, the water does not cause water exposure from the cabin side. On the other hand, the water exposure from the cabin side is a phenomenon that occurs infrequently, for example, in such a case that a driver spills drinking water, and even if it does occur, only a small amount of water exposure is assumed.

As described above, there is a large difference in degree between the water exposure from the vehicle body side and the water exposure from the cabin side, and the on-vehicle connector unit according to the present invention takes this point into consideration.

Hereinafter, an embodiment of the present invention will be described with reference to the drawings.

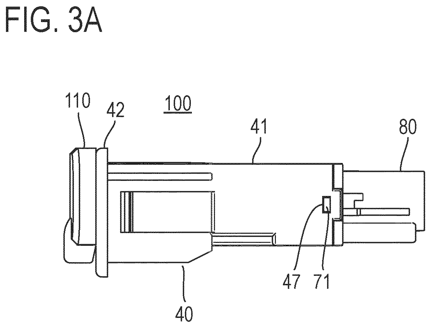

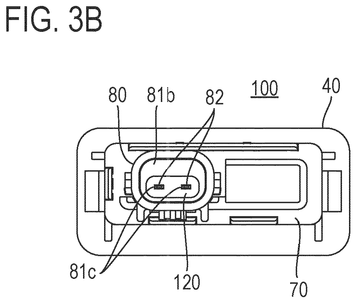

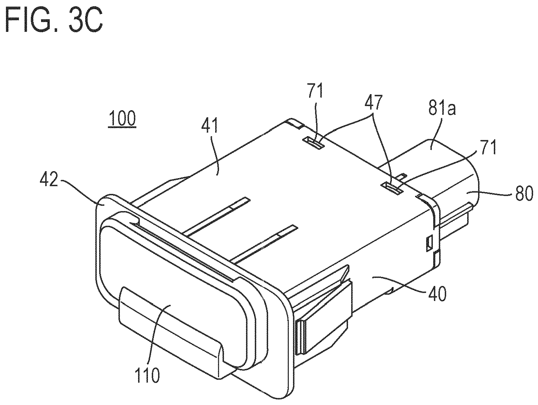

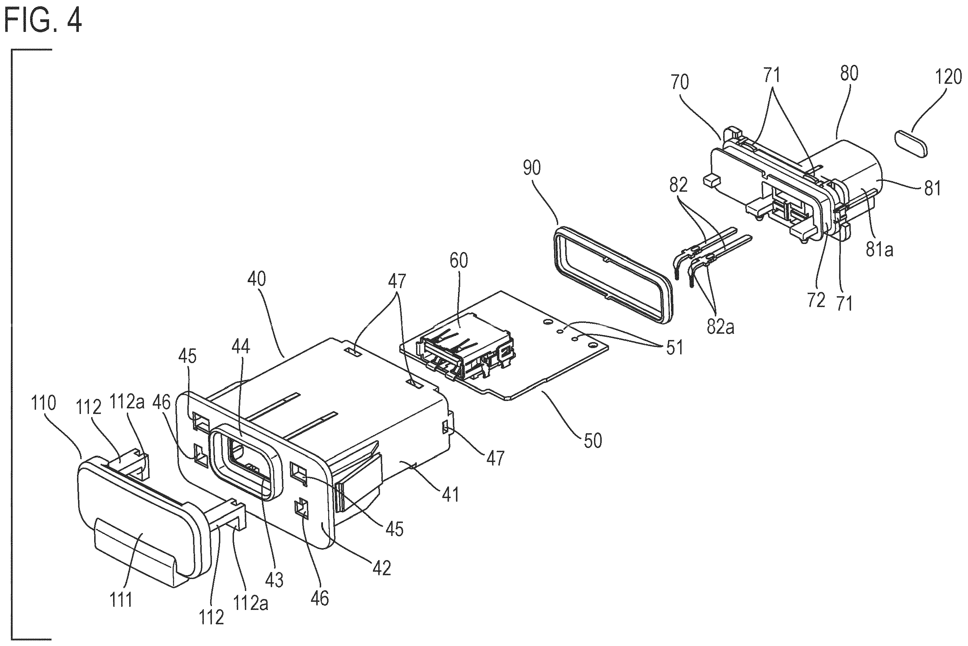

FIGS. 3A, 3B and 3C show the appearance of an embodiment of the on-vehicle connector unit according to the present invention, and FIG. 4 shows the on-vehicle connector unit 100 shown in FIG. 3C in a state where the on-vehicle connector unit 100 is disassembled into various parts.

In this example, the on-vehicle connector unit 100 is configured by a case 40, a circuit board 50, an interface connector 60, a rear surface cover 70, an internal connector 80, a rubber seal 90, a rubber cap 110, and a potting resin 120, and in this example, a housing 81 of the internal connector 80 is formed integrally with the rear surface cover 70. In FIG. 4, reference numeral 82 represents a terminal of the internal connector 80. The internal connector 80 to be connected to a harness connector on the vehicle body side has two terminals 82 in this example.

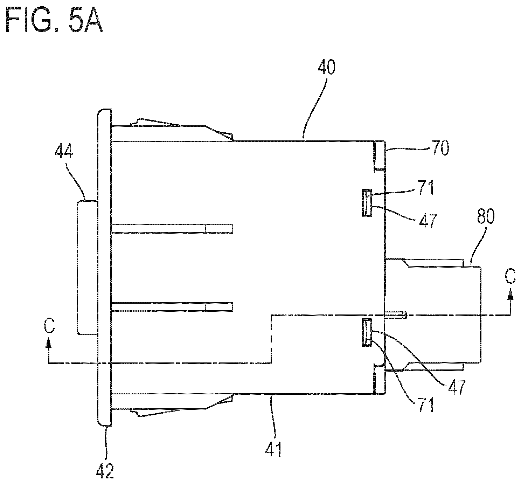

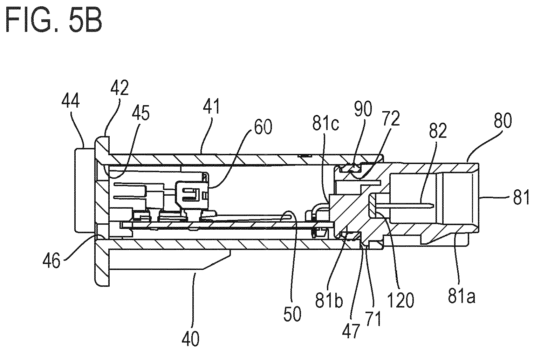

FIGS. 5B and 5B show details of the cross-sectional structure of the on-vehicle connector unit 100 in a state where illustration of the rubber cap 110 is omitted.

The case 40 has a tubular part 41 having a square tubular shape, and a front surface plate part 42 located at the front end of the tubular part 41. An opening 43 is formed in the front surface plate part 42, and an annular part 44 surrounding the opening 43 is formed to be protruded from the plate surface of the front surface plate part 42. Further, attachment holes 45 are formed in the front surface plate part 42 so as to be arranged on the left and right sides of the annular part 44 respectively, and drain holes 46 are likewise formed so as to be arranged on the left and right sides of the annular part 44 and below the attachment holes 45. All of the opening 43, the attachment holes 45 and the drain holes 46 communicate with the internal space of the tubular body 41.

The housing 81 of the internal connector 80 has a tubular shape, and includes a fitting part 81a to be fitted to the harness connector, and a base part 81b covering the proximal end of the fitting part 81a. The base part 81b constitutes a part of the rear surface cover 70, and the fitting part 81a protrudes rearward from the rear surface cover 70. Two terminal press-fitting holes 81c are formed in the base part 81b.

The terminal 82 has an L-shaped bent shape, and a pair of protrusions 82a projecting to both sides in the width direction are formed on one side of the L-shape. The terminal 82 is attached to the housing 81 as shown in FIGS. 3B, 5B, etc. by press-fitting one side of the L-shape into the terminal press-fitting hole 81c. Further, the other side of the L-shape of the terminal 82 is inserted into a through-hole 51 of the circuit board 50 and connected by soldering.

The terminals 82 of the internal connector 80 are connected to the circuit board 50 as described above, the interface connector 60 is further mounted on the circuit board 50, and this circuit board 50 is accommodated in the tubular body 41 of the case 40. The interface connector 60 connected to a connector of an electronic device such as a smart phone on the cabin side is located so as to face the cabin side through the opening 43 provided in the front surface plate part 42 of the case 40. Note that in this example, the interface connector 60 is a USB Type-A connector having a non-waterproof structure.

A rear end of the tubular part 41 of the case 40 is covered with the rear surface cover 70. The rear surface cover 70 has a plurality of protruding parts 71 which are provided on the outer peripheral surface of the rear surface cover 70 so as to protrude therefrom, and the rear surface cover 70 is attached such that these protruding parts 71 are fitted in a plurality of holes 47 provided in the tubular body 41 to block the rear end of the tubular body 41.

In this example, an annular groove 72 is formed in the outer peripheral surface of the rear surface cover 70, and an annular rubber seal 90 is attached to the annular groove 72 so that the rubber seal 90 is interposed between the inner peripheral surface of the rear end of the tubular body 41 and the outer peripheral surface of the rear surface cover 70. Further, resin potting is applied to a portion where the terminals 82 of the internal connector 80 protrude from the base part 81b to the vehicle body side, thereby providing the protruding parts of the terminals 82 with potting resin 120. As a result, the watertight sealing of the rear end of the tubular body 41, that is, the rear end of the case 40 is made complete.

The rubber cap 110 covers the opening 43 of the front surface plate part 42 of the case 40, and has a pair of arm parts 112 on the back surface side of the lid part 111. The attachment of the rubber cap 110 is performed by inserting the arm parts 112 into the two attachment holes 45 of the front surface plate part 42, respectively. Since the arm parts 112 are provided with retaining parts 112a at the tips thereof, the retaining parts 112a are hooked to the front surface plate part 42, whereby the rubber cap 110 is retained. Further, the rubber cap 110 can be pulled out to the front side by the amount corresponding to the length of the arm parts 112, and the deformation (bending) of the arm parts 112 allows the lid part 111 to be displaced, for example, in the vertical direction.

Therefore, when the on-vehicle connector unit 100 is not in use, by pressing the lid part 111 against the front surface plate part 42, the opening 43 which the interface connector 60 faces can be covered. When the on-vehicle connector unit 100 is used, that is, when a connector of an electronic device on the cabin side is connected to the interface connector 60, by pulling the lid part 111, for example, displacing the lid part 111 upwardly, the connection of the connector can be performed without detaching the rubber cap 110.

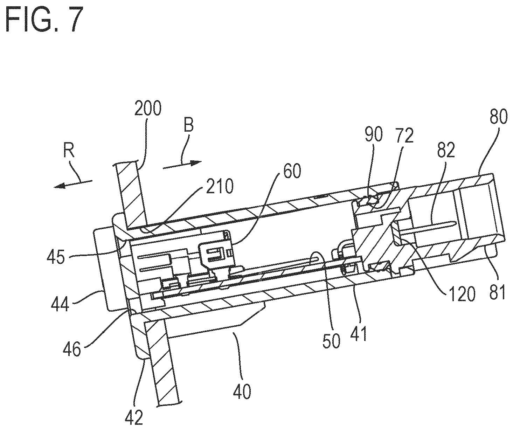

FIG. 7 shows, as an example, a state in which the on-vehicle connector unit 100 described above is attached to a partition wall 200 through which the cabin side and the vehicle body side of a motorcycle are partitioned when the illustration of the rubber cap 110 is omitted. In FIG. 7, an arrow R indicates the cabin side, and an arrow B indicates the vehicle body side.

The on-vehicle connector unit 100 is inserted into an attachment hole 210 provided in the partition wall 200 from the cabin side, and the front surface plate part 42 is attached to the partition wall 200 in close contact therewith. The on-vehicle connector unit 100 attached to the partition wall 200 is in a tilted state as shown in FIG. 7; that is, the on-vehicle connector unit 100 is attached such that the openings on the cabin side of the drain holes 46 faces downward.

The embodiment of the on-vehicle connector unit according to the present invention and the attachment structure thereof have been described above. Since watertight sealing is applied to the rear end of the case 40 which accommodates the circuit board 50, water coming from the vehicle body side does not infiltrate into the case 40 from the rear end of the case 40, and water coming from the vehicle body side is prevented from infiltrating into the cabin side by the partition wall 200. Therefore, the water coming from the vehicle body side does not infiltrate from the front end of the case 40 (the front surface plate part 42) into the case 40, so that the circuit board 50 is not submerged due to water exposure from the vehicle body side.

On the other hand, the drain holes 46 communicating with the tubular part 41 in which the circuit board 50 is accommodated exist in the front surface plate part 42 of the case 40, and are arranged such that one inner wall thereof is located on the extension of the inner bottom surface of the tubular part 41 and the openings thereof on the cabin side face downward when mounted in the vehicle. Therefore, the water coming from the cabin side is well drained by the drain holes 46, so that the circuit board 50 is unlikely to be submerged with a small amount of water coming from the cabin side.

As described above, unlike the waterproof structure in which the circuit board is sealed to be watertight against water exposure from all directions by injecting and filling potting resin into the case as in the prior art, this example provides a proper waterproof structure capable of protecting the circuit board in consideration of the difference in degree between the water exposure from the vehicle body side and the water exposure from the cabin side, which does not require a troublesome and labor-intensive work of injecting and filling potting resin into the case, and the cost can be reduced accordingly.

Note that in the above-described example, the rubber seal 90 is interposed between the rear end of the tubular body 41 of the case 40 and the rear surface cover 70 to perform watertight sealing. However, the rubber seal 90 is unnecessary when it is possible to achieve a watertight structure without any rubber seal. Further, in order to seal a gap that may occur between the terminal press-fitting hole 81c and the terminal 82 in the internal connector 80, partial resin potting is applied. However, the potting resin 120 is unnecessary when the terminals 82 are incorporated in the housing 81 by insert molding.

Although the housing 81 of the internal connector 80 is formed integrally with the rear surface cover 70, the internal connector 80 may be configured as a separate body from the rear surface cover 70 so as to be held by the rear surface cover 70.

Although the interface connector 60 is a USB Type-A connector in the above example, there is a case where a USB Type-C connector is used or a case where another connector is used. Therefore, the type of the interface connector 60 is not particularly limited. In addition, the interface connector 60 may have either a non-waterproof structure or a waterproof structure, but the non-waterproof structure connector is advantageous in terms of cost.

Although the circuit board 50 is not submerged in water, the circuit board 50 may be provided with a moisture-proof coating from the viewpoint of water resistance. As the coating agent, for example, a normal-temperature type fluorine coating agent can be used, and a coating agent having urethane-based resin, acrylic-based resin, or silicone-based resin as a film component can also be used.

### [DESCRIPTION OF REFERENCE NUMERALS]

10 USB port
11 mouthpiece part
11a port opening
12 casing
12a mouthpiece holding part
13 flange
14 hood
15 coupler
16 circuit board
17 potting resin
17a potting surface
20 back wall
30 USB plug
40 case
41 tubular body
42 front surface plate part
43 opening
44 annular part
45 attachment hole
46 drain hole
47 hole
50 circuit board
51 through-hole
60 interface connector
70 rear surface cover
71 protruding part
72 annular groove
80 internal connector
81 housing
81a fitting part
81b base part
81c terminal press-fitting hole
82 terminal
82a protrusion
90 rubber seal
100 on-vehicle connector unit
110 rubber cap
111 lid part
112 arm part
112a retaining part
120 potting resin
200 partition wall
210 attachment hole

## Claims

1. An on-vehicle connector unit (100) to be attached to a partition wall (200) of a vehicle that separates a cabin from a vehicle body in the vehicle, the on-vehicle connector unit (100) comprising:
a case (40) having a tubular body (41) and a front surface plate (42) located at a front end of the tubular body (41), the front surface plate (42) having an opening (43);
a circuit board (50) housed in an internal space of the tubular body (41);
an interface connector (60) mounted on the circuit board (50) and facing the cabin from the opening (43) of the front surface plate (42), the interface connector (60) being for connection to a connector of an electronic device in the cabin;
a rear surface cover (70) for blocking a rear end of the tubular body (41); and
an internal connector (80) held by the rear surface cover (70), an internal connector (80) being for connection to a harness connector in the vehicle body, wherein
the on-vehicle connector unit (100) has a first part thereof to be located in the vehicle body, the first part being waterproof to prevent water from entering the internal space of the tubular body (41),
**characterized in that**
the on-vehicle connector unit (100) has a second part thereof to be located in the cabin, the second part being non-waterproof to allow water to enter the internal space of the tubular body (41),
the front surface plate (42) has a drain hole (46) communicating with the internal space of the tubular body (41), the drain hole (46) being for draining water from the internal space of the tubular body (41), and the drain hole (46) facing in the same direction as the opening (43) of the front surface plate (42) faces.

2. The on-vehicle connector unit (100) according to claim 1,
wherein
the internal connector (80) has a housing (81) thereof formed integrally with the rear surface cover (70),
the internal connector (80) has a terminal (82) protruding from the housing (81) of the internal connector (80) toward the vehicle body, a site of the housing (81) where the terminal (82) of the internal connector (80) protrudes being sealed with potting resin, and
the on-vehicle connector unit (100) further comprises a rubber seal sealing a gap between a rear end of the tubular body (41) and the rear surface cover (70).

3. The on-vehicle connector unit (100) according to claim 1 or 2, wherein
the on-vehicle connector unit (100) further comprises a rubber cap (110) for covering the opening (43).

4. The on-vehicle connector unit (100) according to any one of claims 1 to 3, wherein the circuit board is coated with a moisture-proof coating agent.

5. The on-vehicle connector unit (100) according to any one of claims 1 to 4, wherein the interface connector (60) has a non-waterproof structure.

6. The on-vehicle connector unit (100) according to claim 5, wherein the interface connector (60) is a USB connector.

## Patentansprüche

1. Verbindereinheit (100) am Fahrzeug, die an einer Trennwand (200) eines Fahrzeugs anzubringen ist, die eine Kabine von einer Fahrzeugkarosserie in dem Fahrzeug trennt, wobei die Verbindereinheit (100) am Fahrzeug Folgendes aufweist:
ein Gehäuse (40) mit einem röhrenförmigen Körper (41) und einer Vorderflächenplatte (42), die sich an einem vorderen Ende des röhrenförmigen Körpers (41) befindet, wobei die Vorderflächenplatte (42) eine Öffnung (43) aufweist;
eine Leiterplatte (50), die in einem Innenraum des röhrenförmigen Körpers (41) untergebracht ist;
einen Schnittstellenverbinder (60), der auf der Leiterplatte (50) montiert ist und der Kabine von der Öffnung (43) der Vorderflächenplatte (42) zugewandt ist, wobei der Schnittstellenverbinder (60) zur Verbindung mit einem Verbinder einer elektronischen Vorrichtung in der Kabine dient;
eine Rückflächenabdeckung (70) zum Blockieren eines hinteren Endes des röhrenförmigen Körpers (41); und
einen inneren Verbinder (80), der von der Rückflächenabdeckung (70) gehalten wird, wobei ein innerer Verbinder (80) zur Verbindung mit einem Kabelbaumverbinder in der Fahrzeugkarosserie dient, wobei
die Verbindereinheit (100) am Fahrzeug einen ersten Teil davon in der Fahrzeugkarosserie zu platzieren hat, wobei der erste Teil wasserdicht ist, um zu verhindern, dass Wasser in den Innenraum des röhrenförmigen Körpers (41) eintritt,
**dadurch gekennzeichnet, dass**
die Verbindereinheit (100) am Fahrzeug einen zweiten Teil davon in der Kabine zu platzieren hat, wobei der zweite Teil nicht wasserdicht ist, um zu ermöglichen, dass Wasser in den Innenraum des röhrenförmigen Körpers (41) eintritt,
die Vorderflächenplatte (42) ein Ablaufloch (46) aufweist, das mit dem Innenraum des röhrenförmigen Körpers (41) in Verbindung steht, wobei das Ablaufloch (46) zum Ablassen von Wasser aus dem Innenraum des röhrenförmigen Körpers (41) dient und das Ablaufloch (46) in die gleiche Richtung weist, in die die Öffnung (43) der Vorderflächenplatte (42) weist.

2. Verbindereinheit (100) am Fahrzeug nach Anspruch 1, wobei
der innere Verbinder (80) ein Gehäuse (81) davon aufweist, das integral mit der Rückflächenabdeckung (70) ausgebildet ist,
der innere Verbinder (80) einen Anschluss (82) aufweist, der von dem Gehäuse (81) des inneren Verbinders (80) in Richtung der Fahrzeugkarosserie vorsteht, wobei eine Stelle des Gehäuses (81), an welcher der Anschluss (82) des inneren Verbinders (80) vorsteht, mit Vergussharz abgedichtet ist, und
die Verbindereinheit (100) am Fahrzeug ferner eine Gummidichtung aufweist, die einen Spalt zwischen einem hinteren Ende des röhrenförmigen Körpers (41) und der Rückflächenabdeckung (70) abdichtet.

3. Verbindereinheit (100) am Fahrzeug nach Anspruch 1 oder 2, wobei
die Verbindereinheit (100) am Fahrzeug ferner eine Gummikappe (110) zum Abdecken der Öffnung (43) aufweist.

4. Verbindereinheit (100) am Fahrzeug nach einem der Ansprüche 1 bis 3, wobei die Leiterplatte mit einem feuchtigkeitsbeständigen Beschichtungsmittel beschichtet ist.

5. Verbindereinheit (100) am Fahrzeug nach einem der Ansprüche 1 bis 4, wobei der Schnittstellenverbinder (60) eine nicht wasserdichte Struktur hat.

6. Verbindereinheit (100) am Fahrzeug nach Anspruch 5, wobei der Schnittstellenverbinder (60) ein USB-Verbinder ist.

## Revendications

1. Unité de connecteur embarquée (100) destinée à être fixée à une paroi de séparation (200) d'un véhicule qui sépare une cabine d'une carrosserie de véhicule dans le véhicule, l'unité de connecteur embarquée (100) comprenant :
un boîtier (40) ayant un corps tubulaire (41) et une plaque de surface avant (42) située au niveau d'une extrémité avant du corps tubulaire (41), la plaque de surface avant (42) ayant une ouverture (43) ;
une carte de circuit imprimé (50) logée dans un espace interne du corps tubulaire (41) ;
un connecteur d'interface (60) monté sur la carte de circuit imprimé (50) et faisant face à la cabine depuis l'ouverture (43) de la plaque de surface avant (42), le connecteur d'interface (60) étant destiné à être connecté à un connecteur d'un dispositif électronique dans la cabine ;
un couvercle de surface arrière (70) pour bloquer une extrémité arrière du corps tubulaire (41) ; et
un connecteur interne (80) maintenu par le couvercle de surface arrière (70), un connecteur interne (80) étant destiné à être connecté à un connecteur de harnais dans la carrosserie de véhicule, dans laquelle
l'unité de connecteur embarquée (100) a une première partie de celle-ci destinée à être située dans la carrosserie de véhicule, la première partie étant étanche à l'eau pour empêcher l'eau d'entrer dans l'espace interne du corps tubulaire (41),
**caractérisée en ce que**
l'unité de connecteur embarquée (100) a une seconde partie de celle-ci destinée à être située dans la cabine, la seconde partie étant non étanche à l'eau pour permettre à l'eau d'entrer dans l'espace interne du corps tubulaire (41),
la plaque de surface avant (42) a un trou de drainage (46) communiquant avec l'espace interne du corps tubulaire (41), le trou de drainage (46) étant destiné à drainer l'eau de l'espace interne du corps tubulaire (41), et le trou de drainage (46) faisant face dans la même direction que l'ouverture (43) de la plaque de surface avant (42).

2. Unité de connecteur embarquée (100) selon la revendication 1, dans laquelle
le connecteur interne (80) a un boîtier (81) de celui-ci formé d'un seul tenant avec le couvercle de surface arrière (70),
le connecteur interne (80) a une borne (82) faisant saillie du boîtier (81) du connecteur interne (80) vers la carrosserie de véhicule, un site du boîtier (81) où la borne (82) du connecteur interne (80) fait saillie étant scellé avec une résine d'enrobage, et
l'unité de connecteur embarquée (100) comprend en outre un joint en caoutchouc scellant un espace entre une extrémité arrière du corps tubulaire (41) et le couvercle de surface arrière (70).

3. Unité de connecteur embarquée (100) selon la revendication 1 ou 2, dans laquelle
l'unité de connecteur embarquée (100) comprend en outre un capuchon en caoutchouc (110) pour recouvrir l'ouverture (43).

4. Unité de connecteur embarquée (100) selon l'une quelconque des revendications 1 à 3, dans laquelle la carte de circuit imprimé est revêtue d'un agent de revêtement étanche à l'humidité.

5. Unité de connecteur embarquée (100) selon l'une quelconque des revendications 1 à 4, dans laquelle le connecteur d'interface (60) a une structure non étanche à l'eau.

6. Unité de connecteur embarquée (100) selon la revendication 5, dans laquelle le connecteur d'interface (60) est un connecteur USB.
